Europäisches Patentamt

European Patent Office

Office européen des brevets

(11) Publication number: **0 232 457**
A2

(12) **EUROPEAN PATENT APPLICATION**

(21) Application number: 86112919.5

(22) Date of filing: 18.09.86

(51) Int. Cl.⁴: **B62B 3/02** , B62B 5/00

(30) Priority: 31.01.86 JP 12908/86 U

(43) Date of publication of application:
**19.08.87 Bulletin 87/34**

(84) Designated Contracting States:
**CH DE FR GB IT LI NL SE**

(71) Applicant: **TOKYO MAX & CO., LTD**
**1-48-3 Ohi. Shinagawa-ku**
**Tokyo(JP)**

(72) Inventor: **Suzuki, Makoto**
**1-48-3, Ohi Shinagawa-ku**
**Tokyo(JP)**

(74) Representative: **Twelmeier, Ulrich, Dipl.Phys.**
**et al**
**Patentanwälte Dr. Rudolf Bauer**
**Dipl.-Ing.Helmut Hubbuch, Dipl.Phys. Ulrich**
**Twelmeier Westliche Karl-Friedrich-Strasse**
**29-31**
**D-7530 Pforzheim(DE)**

(54) **Wagon.**

(57) The present invention provides a wagon (1) having plural steps of shelf portions (3,4,5) extended frontwardly from a pair of left and right supports (2). The shelf portions (3,4,5) comprise a frame-like member (7,70) passed over the left and right supports (2) and extended frontwardly, a place plate (8,80) pivotally supported on the front edge (7a,70a) of the frame-like member (7,70) for vertical pivotal movement, and a guide (9,90) which is positioned at the rear end of the place plate (8,80), is detachably engaged by the frame-like member (7,70) and is inclined upwardly and rearwardly so that the guide (9,90) comes into sliding contact with the respective shelf portion of the other wagon to be inserted from behind the frame-like member (7,70) to guide the place plate (8,80) upward.

FIG. 1

## WAGON

### 2. BACKGROUND OF THE INVENTION

#### (1) Field of the Invention

The present invention relates to a wagon capable of moving small articles loaded thereon.

#### (2) Description of the Prior Art

Vehicles heretofore used to carry small articles include wagons of the basket type prepared in supermarkets. The wagon of this type can be loaded with goods and drawn around by a customer himself. In beauty parlors, barber-shops and the like, articles such as scissors, brushes, etc., and small containers such as cosmetics, etc. are often used. Therefore, they use a wagon comprising a plurality of supports (for example, four supports) provided at their lower portions with casters and a plurality of shelf plates supported by the supports to load the wagon with the aforesaid small articles and various trays for movement thereof.

However, in conventional wagons, particularly in the aforesaid wagon having plural steps of shelf plates, the shelf plates are secured to and supported by the supports. This construction fails to miniaturize the wagon, for example, by folding it into a small size, thus posing a problem in that when not in use, a part of a room is occupied by the wagon to narrow the room. In addition, there is a further problem in that where many wagons are used, a space for storing wagons has to be secured.

### 3. SUMMARY OF THE INVENTION

The present invention has been achieved in consideration of the above-described problems noted above with respect to prior art and overcomes these problems by the provision of a wagon having plural steps of shelf portions extended frontwardly from a pair of left and right supports, characterized in that said shelf portion comprises a frame-like member passed over the left and right supports and extended frontwardly, a place plate pivotally supported on the front edge of the frame-like member for vertical pivotal movement, and a guide which is positioned at the rear end of the place plate, is detachably engaged by the frame-like member and is inclined upwardly and rearwardly so that the guide comes into sliding contact with the shelf portion of the other wagon to be inserted from behind the frame-like member to guide the place plate upward.

### 4. BRIEF DESCRIPTION OF THE DRAWINGS

FIG. 1 is an explanatory view showing one embodiment of a wagon according to the present invention; and

FIG. 2 is an explanatory view showing essential parts of one embodiment.

### 5. DETAILED DESCRIPTION OF THE INVENTION

According to the present invention, it is designed so that into a shelf portion wherein a place plate may be rotated upwardly is inserted behind a shelf portion of a further wagon while pushing up said place plate so that more than two wagons are successively disposed in a state such that the shelf portion at the rear position has entered the shelf portion at the front position.

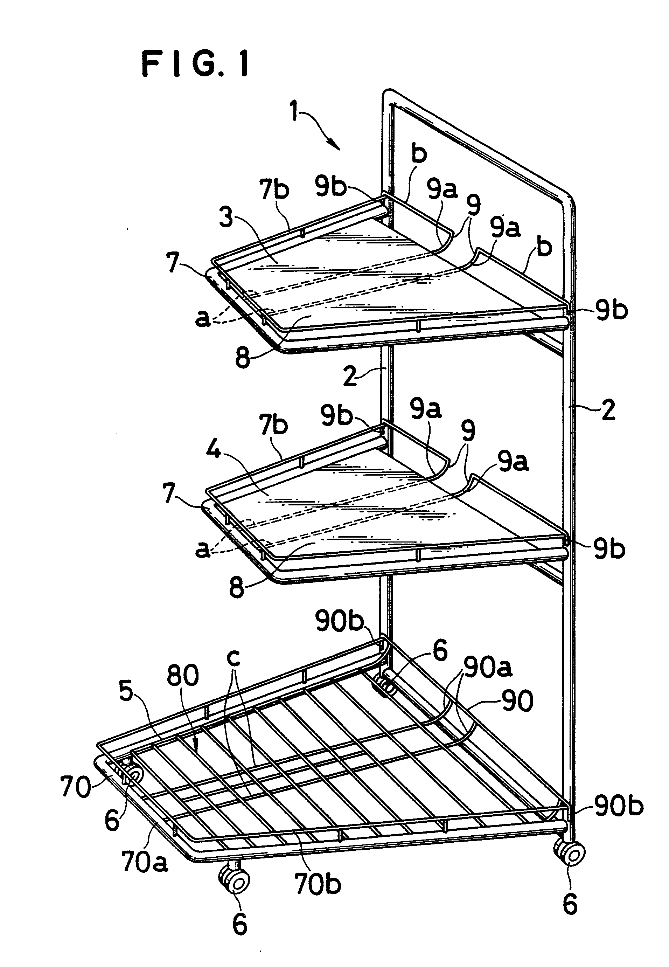

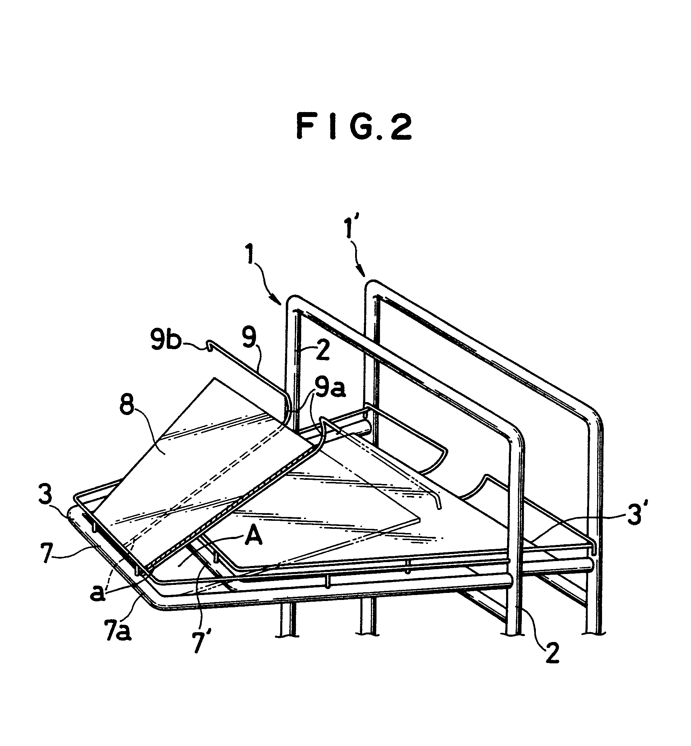

The present invention will now be described in detail by way of an embodiment shown in FIGS. 1 and 2.

A wagon generally indicated at 1 is composed, as shown in FIG. 1, of a pair of left and right supports 2, trapezoidal shelf portions 3, 4 and 5 which are positioned frontwardly of the supports 2 and vertically separated into three steps, and four casters 6 positioned under the lowermost shelf portion 5.

The support 2 consists of left and right side portions of a pipe member bended into a ⊐ - shaped form, and the casters 6 are provided at the lower ends thereof. The shelf portions 3 and 4 each consist of a frame-like member 7 whose end is fastened to the supports 2 and which is extended fronwardly and passed over and between the supports, a trapezoidal place plate 8 and a guide 9. The place plate 8 is pivotally supported on a front edge 7a of the frame-like member 7 through a stay a at the end thereof so that the place plate 8 may be disposed for vertical pivotal movement, as shown in FIG. 2. The guide 9 is fastened to the rear end of the place plate 8. The guide 9 comprises a pair of left and right wires b bended into a predetermined shape and is attached to the back at the rear of the place plate 8. The guide 9 is provided with a guide portion 9a having an end formed with said stay a and which is curved in the form of a circular arc and inclined from the rear end of the place plate 8 toward the upper rear portion and a hook-like portion 9b bended from the guide portion 9a toward the side and having a side end bended. The hook-like portion 9b is detachably engaged by the rear end of a bank portion 7b extending along the frame-like member 7. The hook-like portion 9b is engaged by the bank portion 7b whereby the place plate 8 may be placed on the frame-like member 7.

The shelf portion 5 is designed so that a trapezoidal place plate 80 is placed on a frame-like member 70 passed over and between supports while being extended frontwardly likewise the arrangement of the shelf portions 3 and 4. The shelf portion 5 is larger than the shelf portions 3 and 4. The place plate 80 comprises a combination of a plurality of wires as shown in FIG. 1. The rear end of the plate 80 is curved in the form of a circular arc toward the upper rear portion whereby a guide 90 is formed integral with the rear end of the place plate 80. More specifically, a pair of wires c are arranged from the foremost end to the rear end of the plate 80. It is pivotally supported on a front edge 70a of a frame-like member 70 through the foremost end of the wire c, and the rear end thereof is formed with a circular guide portion 90a inclined toward the upper rear portion, and the guide portion 90a is formed at the side thereof with a hook-like portion 90b. The hook-like portion 90b is detachably engaged by a bank portion 70b along the frame-like member 70 so that the place plate 80 is disposed for for upward pivotal movement.

In the above-described wagon, as mentioned above, the place members of the shelf portions are respectively upwardly pivotable about the respective front ends, and therefore a plurality of wagons may be successively inserted behind one wagon. More specifically, as shown at the shelf portion 3 shown in FIG. 2, wagons 1 and 1' are positioned before and behind each other, and the end of a frame-like member 7' of a shelf portion 3' positioned rearwardly comes into contact with a guide portion 9a of the guide 9 of the shelf portion 3 positioned frontwardly to raise the guide 9, whereby the shelf portion 3' may be inserted into a lower space A of the place plate 8 guided upwardly by the guide 9. Although not shown, also in the shelf portions 4 and 5, shelf portions of the wagon 1' positioned behind corresponding to the shelf portions 4 and 5 are inserted from behind in like manner. The place plates 8 and 80 are respectively upwardly guided by the guides 9 and 90 so that the shelf portions of the wagon 1' positioned at the rear may be further inserted. Then, shelf portions of a plurality of another wagons may be successively inserted from behind the wagon 1' whereby the plurality of wagons may be disposed in a superposed fashion.

As described above, according to the present invention, the place plates of the shelf portions of the wagon are provided so that they are provided upwardly pivotably about the front end, and the guide for upwardly guiding the place plates by insertion of shelf portions of the other wagon is provided at the rear end of the place plate. Therefore, the shelf portions of the other wagon may be inserted into the shelf portions of the frontwardly positioned wagon from behind. The plurality of wagons are disposed in a superposed fashion to miniaturize the whole body of the plurality of wagons and to make small a space for storing wagons when not in use, thus providing excellent practical benefits.

## Claims

1. A wagon (1) having plural steps of shelf portions (3,4,5) extended frontwardly from a pair of left and right supports (2) characterized in that said shelf portion (3,4,5) comprises a framelike member (7,70) passed over the left and right supports (2) and extended frontwardly, a place plate (8,80) pivotally supported on the front edge (7a, 70a) of the frame-like member (7,70) for vertical pivotal movement, and a guide (9, 90) which is positioned at the rear end of the place plate, is detachably engaged by the frame-like member (7,70) and is inclined upwardly and rearwardly so that the guide (9,90) comes into sliding contact with the respective shelf portion of the other wagon (1') to be inserted from behind the frame-like member (7,70) to guide the place plate (8,80) upward.

2. The wagon according to claim 1, wherein the rear end of the place plate (8,80) is directed upwardly and rearwardly to be inclined, and the guide (9,90) is formed integral with the rear end of the place plate (8,80).

FIG. 1

# F I G.2